# EUROPEAN PATENT SPECIFICATION

(11) **EP 0 559 063 B1**
(45) Date of publication and mention of the grant of the patent: **27.08.1997**
(21) Application number: 93102841.9
(22) Date of filing: 24.02.1993
(51) Int. Cl.: F16F 15/12

(54) **Torque vibration absorbing device**
Torsionsschwingungsdämpfer
Dispositif amortisseur de vibrations en torsion

(30) Priority: 29.02.1992 JP 44142/92
(43) Date of publication of application: 08.09.1993
(73) Proprietor: AISIN SEIKI KABUSHIKI KAISHA, Kariya City Aichi Pref. (JP)
(72) Inventor: Suzuki, Hiroshi, Anjo City (JP)
(74) Representative: Kügele, Bernhard

(56) References cited:
- EP-A- 0 286 213
- FR-A- 2 540 583
- GB-A- 2 113 803
- GB-A- 2 151 750

## Description

This invention relates to a torque vibration absorbing device in a driving axle system, such as a clutch disc or a flywheel.

A conventional torque vibration absorbing device is disclosed in the United States Patent No. 2,574,573. The torque vibration absorbing device disclosed in the prior art comprises a clutch hub with a flange extending radially and a pair of intermediate plates disposed at both outsides of the flange so as to be rotatable relative to the intermediate plates. The device includes a disc plate and a sub-plate disposed at the outsides of the intermediate plates so as to be rotatable relative to the flange and the intermediate plates. Furthermore the device comprises a plurality of torsion springs provided in series at the inside of the disc plate and the sub-plate by through the intermediate plates. Therefore the device is able to establish the torsional torque which is generated between the flange and each of the disc plate and the sub-plate so as to be lower relative to the torsional angle between the flange and each of the disc plate and the sub-plate, and is able to reduce the vibration and the noise in a series of a driving axle effectively.

However with the above construction the device sometimes becomes poor in durability due to the reduction of the maximum torque, that is to say stopper torque, permitted under the region of the wide torsional angle between the flange and each of the disc plate and the sub-plate.

It is an object of the present invention to provide a torque vibration absorbing device which increases its durability without any additional elastic member and achieves the increasing of the stopper torque.

It is another object of the present invention to provide a torque vibration absorbing device possessing the simple structure and the low size.

It is a further object of the present invention to provide a torque vibration absorbing device achieving to be constituted within a small cost.

To achieve the above mentioned objects, this invention provides a torque vibration absorbing device comprising a clutch hub with a flange extending radially; a pair of intermediate plates disposed at both outsides of the flange so as to be rotatable relative to the flange; a disc plate and a sub-plate disposed at the outsides of the intermediate plates so as to be rotatable relative to the flange and the intermediate plates; a plurality of elastic members being provided in series within the disc plate and the sub-plate, the disc plate and the sub-plate having first openings receiving said elastic members, whereas, in the direction of decreasing torque, at least one elastic member is maintained to a predetermined amount of compression when a torsional degree between the flange and each of the disc plate and the sub-plate exceeds a predetermined amount thereof whereas the other elastic members are continued to be compressed when said predetermined amount of compression is exceeded, characterized in that the intermediate plates have second openings, and the flange has third openings, in that said elastic members are within said third openings of said flange, and within said second openings of said intermediate plates, in that in direction of increasing torque, at least one elastic member is maintained to a predetermined amount of compression when a torsional degree between the flange and each of the disc plate and the sub-plate exceeds a predetermined amount thereof whereas the other elastic members are continued to be compressed when said predetermined amount of compression is exceeded, said elastic members being arranged within said intermediate plates, said disc plate, said sub-plate and said flange with clearances thus that upon reaching said predetermined amount of compression, first ones of said elastic members are held between said flange and said intermediate plates, whereas second ones of said elastic members are held between said flange and said disc plate and sub-plate; and a torque vibration absorbing device comprising a clutch hub with a flange extending radially; a pair of intermediate plates disposed at both outside of the flange so as to be rotatable relative to the flange; a disc plate and a sub-plate disposed at the outsides of the intermediate plates so as to be rotatable relative to the flange and the intermediate plates; and a plurality of elastic members being provided in series within the disc plate and the sub-plate, in cooperating relationship with said intermediate plates and said flange, the disc plate and the sub-plate having first openings, characterized in that the intermediate plates have second openings, and the flange has third openings, the plurality of elastic members provided in series at the inside of the disc plate and the sub-plate through the intermediate plates are within said third openings of said flange, and first ones of said elastic members possess each a clearance to the disc plate and the sub-plate and a clearance to the flange and second ones of said elastic members each possess a clearance to the disc plate and the sub-plate and a clearance to the flange, and in that said clearances between the respective one of said elastic members and said disc plate and sub-plate are larger than said clearance between the respective one of said elastic members and the flange.

GB-A-2.151.750 describes a torque vibration damping device having a hub flange, intermediary plates and side-plates whereby springs are arranged in a manner cooperating with these plates such as to obtain a torque transmission characteristic which comprises a region of high and a region of lower transmission force under conditions of decreasing torque, obtained by a compression of one or two serial springs respectively.

The features and advantages of the torque vibration absorbing device according to the present invention will be more clearly appreciated from the following description in conjunction with the accompanying drawings wherein:
FIG. 1 is a front view of a torque vibration absorbing device of the present invention;
FIG. 2 is a sectional view of a torque vibration absorbing device shown in FIG. 1;
FIG. 3a is a schematic view of a torque vibration absorbing device under an initial stage;
FIG. 3b is a schematic view of a torque vibration absorbing device under a second stage;
FIG. 3c is a schematic view of a torque vibration absorbing device under a third stage;
FIG. 3d is a schematic view of a torque vibration absorbing device under a final stage; and
FIG. 4 is a characteristic diagram shows the relation between the torsional angle and the torsional torque of a torque vibration absorbing device in FIG. 1 and FIG. 2.

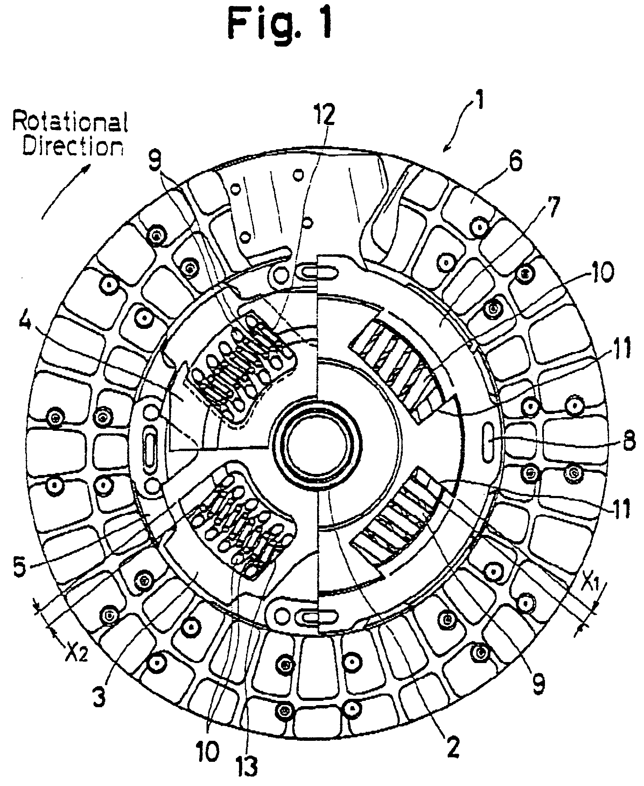

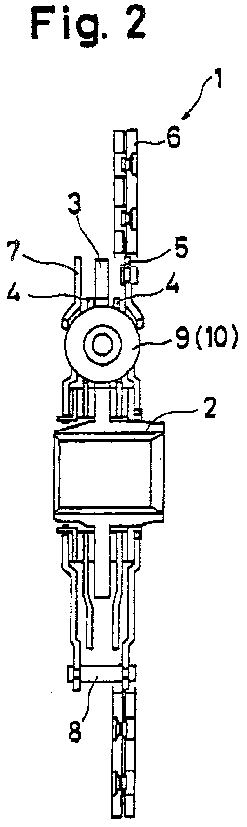

Referring to FIG. 1 and FIG. 2 a clutch disc 1, as a torque vibration absorbing device, mounted on a vehicle comprises a clutch hub 2 with a flange 3, a pair of intermediate plates 4 disposed at both outsides of the flange 3 so as to be rotatable relative to the flange 3. The clutch disc 1 includes a disc plate 5 with a clutch facing 6 and a sub-plate 7 disposed at the outsides of the intermediate plates 4 so as to be rotatable relative to the flange 3 and the intermediate plates 4, and a plurality of connecting pins 8 which connect the disc plate 5 and the sub-plate 7 for preventing a relative rotation between the disc plate 5 and the sub-plate 7. When the clutch disc 1 is in no torsional angle between the flange 3 and each of the disc plate 5 and the sub-plate 7 in an initial stage, each elastic member 9 and 10 is alternately placed in four first openings 11 formed in each of the disc plate 5 and the sub-plate 7 with a clearance to the first openings 11. Each of the elastic members 9 and 10 is in the form of a torsional spring with the same spring constant k. In the initial stage the elastic members 9 and 10 are compressed in four second openings 12 formed in each of the intermediate plates 4, and are placed in four third openings 13 formed in the flange 3 with a clearance to the third openings 13.

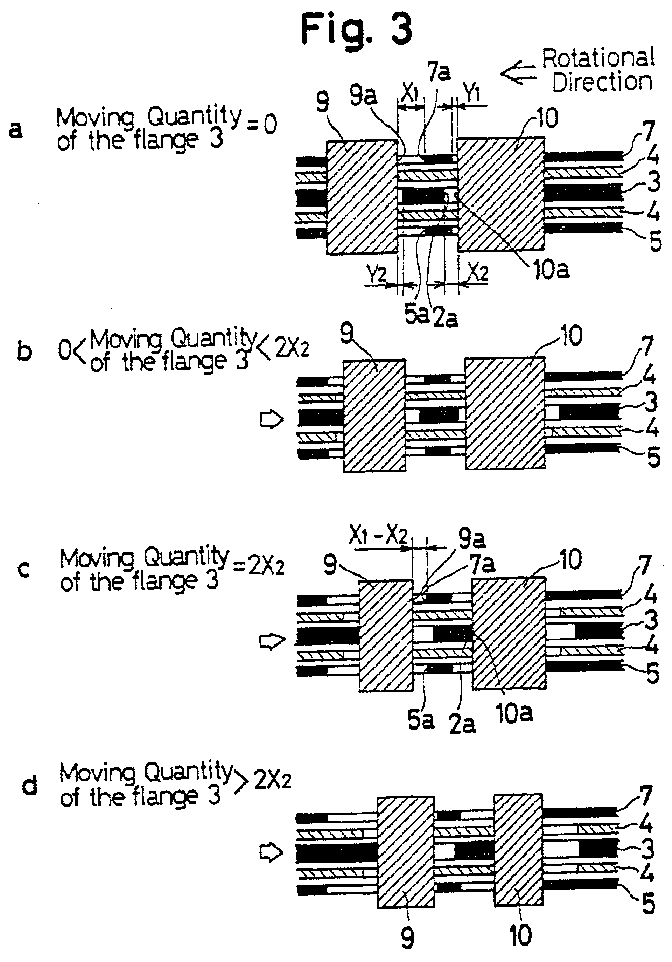

An operation of the clutch disc 1 according to the present invention under acceleration of the vehicle will be described hereinafter. The operation of the clutch disc 1 that the disc plate 5 and the sub-plate 7 are fixed and the flange 3 is moved toward the right hand is shown in FIG. 3a, FIG. 3b, FIG. 3c and FIG. 3d. For the simplification of the explanation, the clutch disc 1 possesses only one elastic member 9 and only one elastic member 10 in FIG. 3a, FIG. 3b, FIG. 3c and FIG. 3d. In FIG. 3a the clutch disc 1 under the initial stage is shown. In FIG. 3a a clearance X₁ is set between the elastic member 9 and the first openings 11 provided in the disc late 5 and the sub-plate 7 so as to be larger than a clearance X₂ set between the elastic member 10 and the third opening 13 provided in the flange 3. In the initial stage a clearance Y₁ is set between the elastic member 10 and the first openings 11 so as to be larger than a clearance Y₂ set between the elastic member 9 and the third opening 13.

In FIG. 3b the clutch disc 1 under a second stage is shown. In FIG. 3b the flange 3 is moved toward the right hand against the disc plate 5 and sub-plate 7 by transmitting driving force from an engine of the vehicle to the clutch disc 1, and the moving stroke of the flange 3 to the disc plate 5 and sub-plate 7, that is to say the torsional amount of the flange 3 to each of the disc plate 5 and the sub-plate 7, is larger than "0" and less than 2X₂. In the second stage the elastic member 9 is compressed toward the right hand by the flange 3, and the intermediate plates 4 are moved toward the right hand by the force from the compressed elastic member 9. Therefore the elastic member 10 is compressed between the intermediate plates 4 and each of the disc plate 5 and the sub-plate 7.

In FIG. 3c the clutch disc 1 under a third stage is shown. In FIG. 3c the torsional amount of the flange 3 to each of the disc plate 5 and the sub-plate 7 achieves 2X₂. In FIG. 3c an end surface 2a of the flange 3 is contacted to a surface 10a of the elastic member 10, and the clutch disc 1 possesses a clearance X₁ - X₂ between a surface 9a of the elastic member 9 and each of end surfaces 5a and 7a of the disc plate 5 and the sub-plate 7.

In FIG. 3d the clutch disc 1 under a final stage is shown. In FIG. 3d the torsional amount of the flange 3 to each of the disc plate 5 and the sub-plate 7 is larger than 2X₂. In FIG. 3d the flange 3 fails to move relative to the intermediate plates 4, and the flange 3 and the intermediate plates 4 move toward the right hand in a body. Under the final stage the elastic member 9 fails to proceed to be compressed because the elastic member 9 is held between the flange 3 and the intermediate plates 4. To the contrary the elastic member 10 proceeds to be compressed at the final stage because the elastic member 10 is held between the flange 3 and each of the disc plate 5 and the sub-plate 7.

As for the spring constant of each of the elastic member 9 and 10 under the above each stage, when the moving stroke or displacement of the flange 3 to each of the disc plate 5 and the sub-plate 7 is less than 2X₂ under the initial stage or the second stage, the spring constant k₁ as summation of the spring constant of the elastic member 9 and 10 is k/2 because of the proceeding of the compression of the elastic member 9 and 10. When the above moving stroke of flange 3 is larger than 2X₂ under the third stage or the final stage, the spring constant k₂ as summation of the spring constant of the elastic member 9 and 10 is k because of the proceeding of the compression of the elastic member 10 and the interruption of the compression of the elastic member 9. After all the spring constant k₂ under the third stage or the final stage is twice as large as the spring constant k₁ under the initial stage or the second stage.

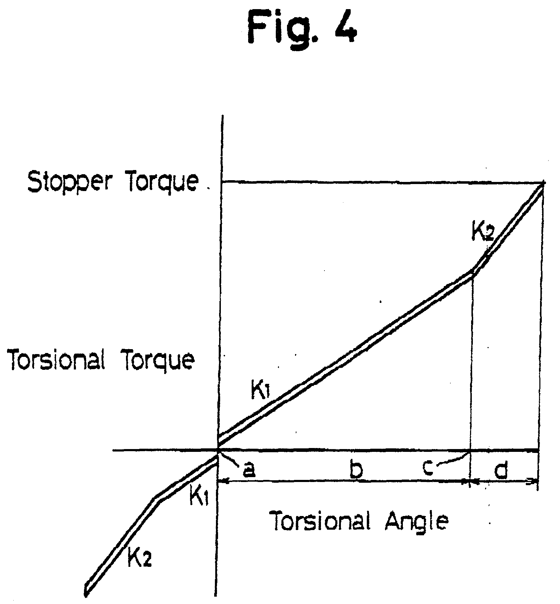

In FIG. 4 a diagram of the torque generated between the flange 3 and each of the disc plate 5 and the sub-plate 7 relative to the torsional angle between the flange 3 and each of the disc plate 5 and the sub-plate 7 is shown. In FIG. 4, references "a", "b", "c" and "d" correspond to the conditions indicated in FIG. 3a, FIG. 3b, FIG. 3c and FIG. 3d respectively. In FIG. 4 the clutch disc 1 is able to increase the torsional stiffness and the stopper torque under the region of the wide torsional angle between the flange 3 and each of the disc plate 5 and the sub-plate 7 because of the interruption of the compression of at least one elastic member. Furthermore the clutch disc 1 is able to reduce the vibration and the noise generated in a series of the driving axle system under the region of the middle and narrow torsional angle between the flange 3 and each of the disc plate 5 and the sub-plate 7 because of the proceeding of the compression of all of the elastic members. Moreover because the clutch disc 1 does not comprise any elastic member other than the elastic members 9 and 10 disposed in series each other, the clutch disc 1 is able to prevent the sharp variation of the torsional torque at the "c" point of the torsional angle in FIG. 4. Therefore the clutch disc 1 possesses the smooth variation of the torsional stiffness, and is effect to prevent the vibration and the noise in the series of the driving axle.

The elastic members included in the torque vibration absorbing device according to the invention may possess the different spring constant each other. Establishing the spring constant of the elastic member 9 is k and that of the elastic member 10 is 2k, the spring constant composed of that of the elastic member 9 and 10 is 2k/3 {=1/(1/k+1/2k) } under the region of the middle and narrow torsional angle, and the composed spring constant is 2k under the region of the wide torsional angle. Therefore the composed spring constant under the region of the wide torsional angle is three times as large as that under the region of the middle and narrow torsional angle.

## Claims

1. A torque vibration absorbing device comprising:
a clutch hub (2) with a flange (3) extending radially;
a pair of intermediate plates (4) disposed at both outsides of the flange (3) so as to be rotatable relative to the flange (3);
a disc plate (5) and a sub-plate (7) disposed at the outsides of the intermediate plates (4) so as to be rotatable relative to the flange (3) and the intermediate plates (4);
a plurality of elastic members (9, 10) being provided in series within the disc plate (5) and the sub-plate (7),
the disc plate (5) and the sub-plate (7) having first openings (11) receiving said elastic members,
whereas, in the direction of decreasing torque, at least one elastic member (9) is maintained to a predetermined amount of compression when a torsional degree between the flange (3) and each of the disc plate (5) and the sub-plate (7) exceeds a predetermined amount thereof whereas the other elastic members are continued to be compressed when said predetermined amount of compression is exceeded,
characterized
in that: the intermediate plates (4) have second openings (12), and the flange (3) has third openings (13),
in that: said elastic members (9, 10) are within said third openings (13) of said flange (3), and within said second openings (12) of said intermediate plates (4),
in that: in direction of increasing torque, at least one elastic member (9) is maintained to a predetermined amount of compression when a torsional degree between the flange (3) and each of the disc plate (5) and the sub-plate (7) exceeds a predetermined amount thereof whereas the other elastic members are continued to be compressed when said predetermined amount of compression is exceeded,
said elastic members (9, 10) being arranged within said intermediate plates (4), said disc plate (5), said sub-plate (7) and said flange (3) with clearances (X1, X2, Y1, Y2) thus that upon reaching said predetermined amount of compression, first ones (9) of said elastic members (9, 10) are held between said flange (3) and said intermediate plates (4), whereas second ones (10) of said elastic members (9, 10) are held between said flange (3) and said disc plate (5) and sub-plate (7).

2. A torque vibration absorbing device as recited in claim 1, wherein each of the elastic members is in the form of a comprising spring.

3. A torque vibration absorbing device as recited in claim 1, wherein each of the elastic members is in the form of an elastic rubber.

4. A torque vibration absorbing device as recited in claim 1, wherein spring constants of the elastic members are equal to each other.

5. A torque vibration absorbing device comprising:
a clutch hub (2) with a flange (3) extending radially;
a pair of intermediate plates (4) disposed at both outsides of the flange (3) so as to be rotatable relative to the flange;
a disc plate (5) and a sub-plate (7) disposed at the outsides of the intermediate plates (4) so as to be rotatable relative to the flange (3) and the intermediate plates (4); and
a plurality of elastic members (9, 10) being provided in series within the disc plate (5) and the sub-plate (7), in cooperating relationship with said intermediate plates (4) and said flange (3),
the disc plate and the sub-plate having first openings (11),
characterized
in that: the intermediate plates (4) have second openings (12), and
the flange (3) has third openings (13),
the plurality of elastic members (9, 10) provided in series at the inside of the disc plate (5) and the sub-plate (7) through the intermediate plates (4) are within said third openings (13) of said flange (3), and
first ones (9) of said elastic members (9, 10) possess each a clearance (X1) to the disc plate (5) and the sub-plate and a clearance (Y2) to the flange (3) and second ones (10) of said elastic members (9, 10) each possess a clearance (Y1) to the disc plate (5) and the sub-plate (7) and a clearance (X2) to the flange (3), and in that: said clearances (X1, Y1) between the respective one of said elastic members (9, 10) and said disc plate (5) and sub-plate (7) are larger than said clearance (X2, Y2) between the respective one of said elastic members (9, 10) and the flange (3).

6. A torque vibration absorbing device as recited in claim 5, wherein each of the elastic members is in the form of a compression spring.

7. A torque vibration absorbing device as recited in claim 5, wherein each of the elastic members is in the form of an elastic rubber.

8. A torque vibration absorbing devide as recited in claim 5, wherein spring constants of the elastic members are equal to each other.

## Patentansprüche

1. Vorrichtung zur Torsionsschwingungsdämpfung, welche folgendes aufweist:
eine Kupplungsnabe (2) mit einem sich radial erstrekkenden Flansch (3);
ein Paar von Zwischenplatten (4), die zu beiden Außenseiten des Flansches (3) derart angeordnet sind, daß sie relativ zum Flansch (3) drehbar sind;
eine Scheibenplatte (5) und eine Hilfsplatte (7), die an den Außenseiten der Zwischenplatten (4) derart angeordnet sind, daß sie relativ zum Flansch (3) und zu den Zwischenplatten (4) drehbar sind;
eine Mehrzahl von innerhalb der Scheibenplatte (5) und der Hilfsplatte (7) hintereinandergeschalteten elastischen Elementen (9, 10),
wobei die Scheibenplatte (5) und die Hilfsplatte (7) erste Öffnungen zur Aufnahme der elastischen Elemente aufweisen,
wogegen wenigstens ein elastisches Element (9) in Richtung des abnehmenden Drehmomentes in einem vorbestimmten Ausmaß an Kompression gehalten ist, wenn ein Grad an Verdrehung zwischen dem Flansch (3) und jeweils der Scheibenplatte (5) und der Hilfsplatte (7) einen vorbestimmten Betrag desselben überschreitet, wogegen die anderen elastischen Elemente weiterhin zusammengedrückt werden, wenn das vorbestimmte Ausmaß an Kompression überschritten wird,
dadurch gekennzeichnet,
daß die Zwischenplatten (4) zweite Öffnungen (12) und der Flansch (3) dritte Öffnungen (13) aufweisen,
daß die elastischen Elemente (9, 10) sich innerhalb der dritten Öffnungen (13) des Flansches (3) und in den zweiten Öffnungen (12) der Zwischenplatten (4) befinden,
daß wenigstens ein elastisches Element (9) in Richtung des zunehmenden Drehmomentes in einem vorbestimmten Ausmaß an Kompression gehalten ist, wenn ein Grad an Verdrehung zwischen dem Flansch (3) und jeweils der Scheibenplatte (5) und der Hilfsplatte (7) einen vorbestimmten Betrag desselben überschreitet, wogegen die anderen elastischen Elemente weiterhin zusammengedrückt werden, wenn das vorbestimmte Ausmaß an Kompression überschritten wird,
wobei die elastischen Elemente (9, 10) in den Zwischenplatten (4), der Scheibenplatte (5), der Hilfsplatte (7) und dem Flansch (3) mit Freiräumen (X1, X2, Y1, Y2) derart angeordnet sind, daß beim Erreichen des vorbestimmten Ausmaßes an Kompression die ersten (9) der elastischen Elemente (9, 10) zwischen dem Flansch (3) und den Zwischenplatten (4) gehalten sind, wogegen die zweiten (10) der elastischen Elemente (9, 10) zwischen dem Flansch (3) und der Scheibenplatte (5) sowie der Hilfsplatte (7) gehalten sind.

2. Vorrichtung zur Torsionsschwingungsdämpfung nach Anspruch 1, bei der jedes der elastischen Elemente derart ausgebildet ist, daß sie eine Feder aufweist.

3. Vorrichtung zur Torsionsschwingungsdämpfung nach Anspruch 1, bei der jedes der elastischen Elemente in Form eines elastischen Gummis vorliegt.

4. Vorrichtung zur Torsionsschwingungsdämpfung nach Anspruch 1, bei der die Federkonstanten der elastischen Elemente einander gleich sind.

5. Vorrichtung zur Torsionsschwingungsdämpfung, welche folgendes aufweist:
eine Kupplungsnabe (2) mit einem sich radial erstrekkenden Flansch (3);
ein Paar von Zwischenplatten (4), die zu beiden Außenseiten des Flansches (3) derart angeordnet sind, daß sie relativ zum Flansch (3) drehbar sind;
eine Scheibenplatte (5) und eine Hilfsplatte (7), die an den Außenseiten der Zwischenplatten (4) derart angeordnet sind, daß sie relativ zum Flansch (3) und zu den Zwischenplatten (4) drehbar sind; und
eine Mehrzahl von innerhalb der Scheibenplatte (5) und der Hilfsplatte (7) hintereinandergeschalteten elastischen Elementen (9, 10), die mit den Zwischenplatten (4) und dem Flansch (3) zusammenwirken,
wobei die Scheibenplatte und die Hilfsplatte erste Öffnungen (11) aufweisen,
dadurch gekennzeichnet,
daß die Zwischenplatten (4) zweite Öffnungen (12) und
der Flansch (3) dritte Öffnungen (13) aufweisen,
daß die an der Innenseite der Scheibenplatte (5) und der Hilfsplatte (7) durch die Zwischenplatten (4) hindurch hintereinandergeschaltete Mehrzahl elastischer Elemente (9, 10) sich innerhalb der dritten Öffnungen (13) des Flansches (3) befindet, und
daß erste (9) der elastischen Elemente (9, 10) jeweils einen Freiraum (X1) zur Scheibenplatte (5) und zur Hilfsplatte besitzen sowie einen Freiraum (Y2) zum Flansch (3), und daß zweite (10) der elastischen Elemente (9, 10) jeweils einen Freiraum (Y1) zur Scheibenplatte (5) und zur Hilfsplatte (7) besitzen sowie einen Freiraum (X2) zum Flansch (3), und
daß die Freiräume (X1, Y1) zwischen den jeweiligen elastischen Elementen (9, 10) und der Scheibenplatte (5) sowie der Hilfsplatte (7) größer sind als der Freiraum (X2, Y2) zwischen dem jeweiligen elastischen Element (9, 10) und dem Flansch (3).

6. Vorrichtung zur Torsionsschwingungsdämpfung nach Anspruch 5, bei der jedes der elastischen Elemente in Form einer Druckfeder vorliegt.

7. Vorrichtung zur Torsionsschwingungsdämpfung nach Anspruch 5, bei der jedes der elastischen Elemente in Form eines elastischen Gummis vorliegt.

8. Vorrichtung zur Torsionsschwingungsdämpfung nach Anspruch 5, bei der die Federkonstanten der elastischen Elemente einander gleich sind.

## Revendications

1. Dispositif amortisseur de vibrations en torsion comprenant :
- un moyeu d'embrayage (2) avec un flasque (3) s'étendant radialement;
- une paire de plaques intermédiaires (4) disposées aux deux côtés extérieurs du flasque (3) de manière à être rotatives par rapport au flasque (3);
- une plaque en forme de disque (5) et une sous-plaque (7) disposées aux côtés extérieurs des plaques intermédiaires (4) de manière à pouvoir tourner par rapport au flasque (3) et aux plaques intermédiaires (4);
- une multitude d'éléments élastiques (9, 10) fournis en série dans la plaque en forme de disque (5) et la sous-plaque (7),
- la plaque en forme de disque (5) et la sous-plaque (7) comportant des premières ouvertures (11) qui reçoivent lesdits éléments élastiques,
alors que, dans le sens de diminution du couple, au moins un élément élastique (9) est maintenu suivant une quantité de compression prédéterminée lorsque le degré de torsion entre le flasque (3) et chacune de la plaque en forme de disque (5) et de la sous-plaque (7) dépasse une quantité prédéterminée alors que les autres éléments élastiques continuent à être comprimés lorsque ladite quantité prédéterminée de compression est dépassée,
caractérisé
en ce que : les plaques intermédiaires (4) présentent des secondes ouvertures (12), et le flasque (3) a des troisième ouvertures (13),
en ce que : lesdits éléments élastiques (9, 10) sont dans lesdites troisièmes ouvertures (13) dudit flasque (3), et dans lesdites secondes ouvertures (12) desdites plaques intermédiaires (4),
en ce que : dans le sens d'augmentation du couple, au moins un élément élastique (9) est maintenu à une quantité de compression prédéterminée lorsque le degré de torsion entre le flasque (3) et chacune de la plaque en forme de disque (5) et de la sous-plaque (7) dépasse une quantité prédéterminée alors que les autres éléments élastiques continuent à être comprimés lorsque ladite quantité de compression prédéterminée est dépassée,
- lesdits éléments élastiques (9, 10) étant disposés dans lesdites plaques intermédiaires (4), ladite plaque en forme de disque (5), ladite sous-plaque (7) et ledit flasque (3) avec des jeux (X1, X2, Y1, Y2) tels que, lors de l'atteinte de ladite quantité de compression prédéterminée, des premiers éléments (9) desdits éléments élastiques (9, 10) sont maintenus entre ledit flasque (3) et lesdites plaques intermédiaires (4), alors que des seconds éléments (10) desdits éléments élastiques (9, 10) sont maintenus entre ledit flasque (3) et ladite plaque en forme de disque (5) et la sous-plaque (7).

2. Dispositif amortisseur de vibrations en torsion selon la revendication 1, dans lequel chacun des éléments élastiques a la forme d'un ressort de compression.

3. Dispositif amortisseur de vibrations en torsion selon la revendication 1, dans lequel chacun des éléments élastiques se présente sous la forme d'un caoutchouc élastique.

4. Dispositif amortisseur de vibrations en torsion selon la revendication 1, dans lequel les constantes de rappel des éléments élastiques sont égales les unes aux autres.

5. Dispositif amortisseur de vibrations en torsion comprenant :
- un moyeu d'embrayage (2) avec un flasque (3) s'étendant radialement;
- une paire de plaques intermédiaires (4) disposées aux deux côtés extérieurs du flasque (3) de manière à pouvoir tourner par rapport au flasque;
- une plaque en forme de disque (5) et une sous-plaque (7) disposées aux côtés extérieurs des plaques intermédiaires (4) de manière à pouvoir tourner par rapport au flasque (3) et aux plaques intermédiaires (4); et
- une multitude d'éléments élastiques (9, 10) montés en série à l'intérieur de la plaque en forme de disque (5) et de la sous-plaque (7), en relation de coopération avec lesdites plaques intermédiaires (4) et ledit flasque (3),
- la plaque en forme de disque (5) et la sous-plaque (7) comportant des premières ouvertures (11),
caractérisé en ce que :
- les plaques intermédiaires (4) comportent des secondes ouvertures (12), et
- le flasque (3) a des troisième ouvertures (13),
- la multitude d'éléments élastiques (9, 10) montés en série à l'intérieur de la plaque en forme de disque (5) et de la sous-plaque (7) au travers des plaques intermédiaires (4) sont dans lesdites troisièmes ouvertures (13) dudit flasque (3), et
- des premiers éléments (9) parmi lesdits éléments élastiques (9, 10) possèdent chacun un jeu (X1) avec la plaque en forme de disque (5) et la sous-plaque et un jeu (Y2) avec le flasque (3) et des seconds éléments (10) parmi lesdits éléments élastiques (9, 10) possèdent chacun un jeu (Y1) avec la plaque en forme de disque (5) et la sous-plaque (7) et un jeu (X2) avec le flasque (3), et
en ce que : lesdits jeux (X1, Y1) entre les éléments respectifs desdits éléments élastiques (9, 10) et ladite plaque en forme de disque (5) et ladite sous-plaque (7) sont plus grands que ledit jeu (X2, Y2) entre les éléments respectifs desdits éléments élastiques (9, 10) et le flasque (3).

6. Dispositif amortisseur de vibrations en torsion selon la revendication 5, dans lequel chacun des éléments élastiques a la forme d'un ressort de compression.

7. Dispositif amortisseur de vibrations en torsion selon la revendication 5, dans lequel chacun des éléments élastiques se présente sous la forme d'un caoutchouc élastique.

8. Dispositif amortisseur de vibrations en torsion selon la revendication 5, dans lequel les constantes de rappel des éléments élastiques sont égales les unes aux autres.
